(19) **Europäisches Patentamt**
**European Patent Office**
**Office européen des brevets**

(11) **EP 4 068 684 A1**

(12) ## EUROPÄISCHE PATENTANMELDUNG

(43) Veröffentlichungstag:
**05.10.2022 Patentblatt 2022/40**

(21) Anmeldenummer: **21166626.8**

(22) Anmeldetag: **01.04.2021**

(51) Internationale Patentklassifikation (IPC):
**H04L 9/30** (2006.01)

(52) Gemeinsame Patentklassifikation (CPC):
**H04L 9/3093**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **QuantiCor Security GmbH**
**64295 Darmstadt (DE)**

(72) Erfinder: **Bansarkhani, Dr. Rachid El**
**65479 Raunheim (DE)**

(74) Vertreter: **Limbeck, Achim**
**Rechtsanwaltskanzlei Dr. Limbeck**
**Auf dem Schimmerich 11**
**53579 Erpel (DE)**

(54) **KRYPTOGRAFISCHES SYSTEM MIT FALLTÜRFUNKTION**

(57) Die vorliegende Erfindung betrifft ein kryptographisches System (100) mit Falltürfunktion zur Erstellung von Urbildern zu Elementen des Bildbereichs einer Falltürfunktion mittels einer oder mehrerer Invertiervorrichtungen (101), welche es erlauben, Urbilder mit Hilfe von mindestens einer Falltür zu generieren. Das erfindungsgemäße Kryptosystem (100) ist dadurch gekennzeichnet, dass zur Erzeugung von mindestens einem Urbild von mindestens einem Element bezüglich einer gitterbasierten Falltürfunktion F eine Falltür zum Einsatz kommt, wobei zur Erzeugung eines Urbildes mindestens ein zufälliger Term erzeugt wird, dessen Kovarianzmatrix durch

$L^t \cdot \left( \mathrm{Diag}(s_1^2, \ldots, s_k^2) - r^2 \cdot T^t \cdot T \right) \cdot L$ gegeben ist und wobei vorzugsweise mindestens zwei Elemente $s_i^2 \neq s_j^2$ mit mindestens einem Element $s_i < SV(T) \cdot r$ vorgesehen

$$s_j \geq s \cdot \sqrt{1 + \frac{1}{\frac{s_i^2}{r^2} - 1}},$$

sind, die a) $s_i < s$ und oder b) $s_i$

$= c \cdot r$ und $s_j = s \cdot \sqrt{1 + \frac{1}{c^2 - 1}}$ für $s \geq SV(T) \cdot r$ und $r, c \geq 1$ erfüllen.

*FIG. 1*

EP 4 068 684 A1

**Beschreibung**

Technisches Gebiet

Die vorliegende Erfindung betrifft eine kryptographische Falltürfunktion ("Trapdoor-Function") zur Erzeugung von Urbildern mittels einer oder mehreren Vorrichtungen, welche es erlauben, Urbilder für vorgegebene Elemente zu erzeugen. Kryptografische Falltürfunktionen werden unter anderem in kryptografischen Signatur-, Verschlüsselungs-, Schlüsselkapselungs- und Authentifikationssystemen verwendet.

Stand der Technik

Eine Falltürfunktion ermöglicht es, Urbilder von Elementen des Bildbereichs der Falltürfunktion zu generieren. Gültige Urbilder für vorgegebene Elemente können nur mit Hilfe der geheimen Falltür in polynomieller Zeit erzeugt werden. Mit Falltürfunktionen können vielfältige Kryptoverfahren konstruiert werden, um wichtige Sicherheitsziele zu realisieren, wie z.B. Vertraulichkeit, Unverfälschbarkeit oder Authentizität. Beispielsweise können Falltürfunktionen dazu verwendet werden, um eine Vielzahl von Anwendungen zu realisieren, wie beispielsweise sichere Updates oder sichere Authentifikation, aber auch anonyme oder blinde Signaturen, datenschutzerhaltende Zahlungssysteme, anonyme Transaktionen innerhalb der Blockchain oder Schwellwert-Signaturen für Blockchain-Transaktionen.

Viele der aktuell eingesetzten Protokolle basieren jedoch auf Rechenproblemen, die anfällig für Quantencomputerangriffe sind. Weiterhin sind viele Falltürfunktionen sehr ineffizient. Das bezieht sich insbesondere auf Speichergrößen und das Laufzeitverhalten der resultierenden Kryptoprimitive, wie z.B. beim Einsatz in Signatur- oder Verschlüsselungssystemen. Viele gitterbasierte Falltürfunktionen erzeugen Urbilder, wobei dafür Perturbotionen erzeugt werden, deren Kovarianzmatrix durch $s^2 \cdot I - r^2 \cdot T^t \cdot T$ gegeben sind, wobei $s \geq r \cdot SV(T)$ gilt und $SV(T)$ den größten Singulärwert der Matrix $T$ angibt. Diese Perturbationen korrigieren die Verteilung der resultierenden Urbilder, sodass diese unabhängig und identisch verteilt sind. Die einheitliche Nutzung des größten Singulärwerts hat weitreichende Konsequenzen, wie z.B. ein erhöhter Speicherbedarf des Urbildes sowie schlechtere Effizienz-Eigenschaften inklusive schlechterer Performance beim Einsatz in Kryptosystemen. Die Zahl $s$ kann in diesem Fall nicht kleiner als $r \cdot SV(T)$ gewählt werden, da die Kovarianzmatrix dann nicht mehr positiv semidefinit ist, wodurch die Erzeugung von Perturbationen fehlschlägt. Bisher sind keine Verbesserungen bekannt.

Darstellung der Erfindung

Der vorliegenden Erfindung liegt die Aufgabe zugrunde, Urbilder von Elementen bezüglich gitterbasierter Falltürfunktionen zu erzeugen, die bessere Speichergrößen und Effizienzeigenschaften aufweisen können als bisherige Falltürfunktionen. Dies gilt insbesondere auch beim Einsatz in anderen Kryptosystemen, wie z.B. Signatur- oder Verschlüsselungssystemen. Aufgrund der Nutzung einer Diagonalmatrix mit verschiedenen Elementen auf der Diagonalen können Perturbationen oder zufällige Elemente entsprechend einer Verteilung mit Kovarianzmatrix

$$\mathrm{Diag}(s_1^2, \ldots, s_k^2) - r^2 \cdot T^t \cdot T$$

generiert werden, wobei einige Elemente $s_j^2$ auf der Diagonalen der Diagonalmatrix $\mathrm{Diag}(s_1^2, \ldots, s_k^2)$ signifikant kleiner als $r^2 \cdot SV(T)^2$ sind. Dies führt dazu, dass in einigen Ausführungsformen Urbilder erzeugt werden, deren Komponenten nicht identisch verteilt sind. Auf diese Weise können Speichergrößen, wie z.B. Schlüsselgrößen oder Signaturgrößen, und Effizienzeigenschaften von Kryptosystemen stark verbessert werden.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Systems sind in den abhängigen Unteransprüchen angegeben.

Erfindungsgemäß ist ein kryptographisches System mit Falltürfunktion der eingangs genannten Art dadurch gekennzeichnet, dass zur Erzeugung von mindestens einem Urbild von mindestens einem Element bezüglich einer gitterbasierten Falltürfunktion $F$ eine Falltür zum Einsatz kommt, wobei zur Erzeugung eines Urbildes mindestens ein zufälliger Term erzeugt wird, dessen Kovarianzmatrix durch

$$L^t \cdot \left(\mathrm{Diag}(s_1^2, \ldots, s_k^2) - r^2 \cdot T^t \cdot T\right) \cdot L$$

gegeben ist und mindestens zwei Elemente $s_i^2 \neq s_j^2$ vorgesehen sind, mit mindestens einem Element $s_i < SV(T) \cdot r$.

In einer besonders vorteilhaften Ausführungsform der Erfindung werden entweder mindestens zwei Elemente $s_i^2 \neq s_j^2$ mit $s_i < s$ und $s_j \geq s \cdot \sqrt{1 + \frac{1}{\frac{s_i^2}{r^2} - 1}}$

oder $s_i = c \cdot r$ und $s_j = s \cdot \sqrt{1 + \frac{1}{c^2 - 1}}$ für $s \geq SV(T) \cdot r$ und $r, c \geq 1$ vorgesehen.

Die vorliegende Erfindung stützt sich auf die spezielle Struktur der Falltür, sodass die in der Erfindung angeführte Kovarianzmatrix $\mathrm{Diag}(s_1^2, \ldots, s_k^2) \cdot I - r^2 \cdot$

$T^t \cdot T$ positiv semidefinit ist und die Effizienz dadurch signifikant gesteigert werden kann. Mit der Verbesserung sind Komponenten des ermittelten Urbildes nicht mehr identisch verteilt im Vergleich zur Kovarianzmatrix $s^2 \cdot I$. Stattdessen sind die Komponenten gemäß der Kovarianzmatrix $\mathrm{Diag}(s_1^2, ..., s_k^2)$ verteilt, wobei viele Elemente deutlich kleiner als $r \cdot SV(T)$ gewählt werden können. Dadurch sinken der Speicherbedarf und die Laufzeit von assoziierten Algorithmen. Die Erzeugung von gültigen Urbildern ohne Kenntnis der Falltür kann bei gitterbasierten Falltürfunktionen auf die Schwierigkeit der Lösung von gitterbasierten Brechnungsproblemen zurückgeführt werden, wie z.B. das LWE- oder SIS-Problem oder Varianten davon. Diese Probleme können auch von Quantencomputern nicht effizient, d.h. in polynomieller Zeit, gelöst werden.

Kurzbeschreibung der Zeichnungen

Weitere Ziele, Merkmale, Vorteile und Anwendungsmöglichkeiten der erfindungsgemäßen Falltürfunktion ergeben sich aus der nachfolgenden Beschreibung von Ausführungsbeispielen anhand der Zeichnungen.

Die vorliegende Erfindung ist dabei nicht auf die offenbarten Konzepte und Formen beschränkt, sondern soll all jene Modifikationen, Äquivalente, Analogone und Alternativen umfassen, die mit dieser Erfindungsmeldung und den in dieser Erfindungsmeldung dargelegten Ansprüchen kompatibel sind. Insbesondere erlauben die dargestellten Ausführungsbeispiele der vorliegenden Erfindung verschiedene Modifikationen und andere mögliche Formen.

Die Ausführungsformen in der vorliegenden Erfindung können dabei in Software, Hardware, Firmware oder Kombinationen davon implementiert sein. Weitere mögliche Implementierungsformen der offenbarten Ausführungsformen können Implementierungen als Anweisungen enthalten, die von einem oder mehreren maschinenlesbaren Speichermedien, die von einem oder mehreren Prozessoren verarbeitet werden, getragen oder auf diesen gespeichert werden.

Die offenbarten Ausführungsformen in der vorliegenden Erfindung können weiterhin Merkmale, Strukturen und/oder Verfahren enthalten, die auf eine bestimmte Weise angeordnet und/oder geordnet sind. Es versteht sich jedoch, dass die Anordnung und/oder Reihenfolge von den in den Ausführungsformen und Figuren der vorliegenden Erfindungsmeldung gezeigten abweichen kann.

In den Zeichnungen zeigen:

FIG. 1 ein vereinfachtes Blockdiagramm einer Ausführungsform eines Kryptosystems zur Erzeugung einer kryptografischen Falltürfunktion zusammen mit einer Falltür;

FIG. 2 ein vereinfachtes Blockdiagramm einer Ausführungsform einer möglichen Invertiervorrichtung (101) in einem Kryptosystem zur Erzeugung von Urbildern von Elementen bezüglich einer Falltürfunktion gemäß FIG. 1;

FIG. 3 ein vereinfachtes Blockdiagramm einer Ausführungsform einer Umgebung für eine Vorrichtung (101) gemäß FIG. 1;

FIG. 4 ein vereinfachtes Blockdiagramm einer Ausführungsform einer Verifiziervorrichtung gemäß FIG. 1;

FIG. 5 ein vereinfachtes Flussdiagramm einer Ausführungsform eines Verfahrens zum Einrichten eines Kryptosystems gemäß FIG. 1;

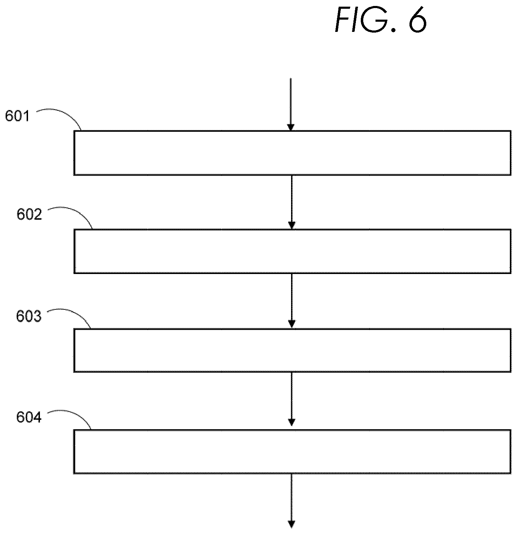

FIG. 6 ein vereinfachtes Flussdiagramm einer Ausführungsform eines Verfahrens zum Erzeugen von Urbildern einer oder mehrerer Falltürfunktionen durch Invertiervorrichtungen (101) des Kryptosystems gemäß FIG. 1;

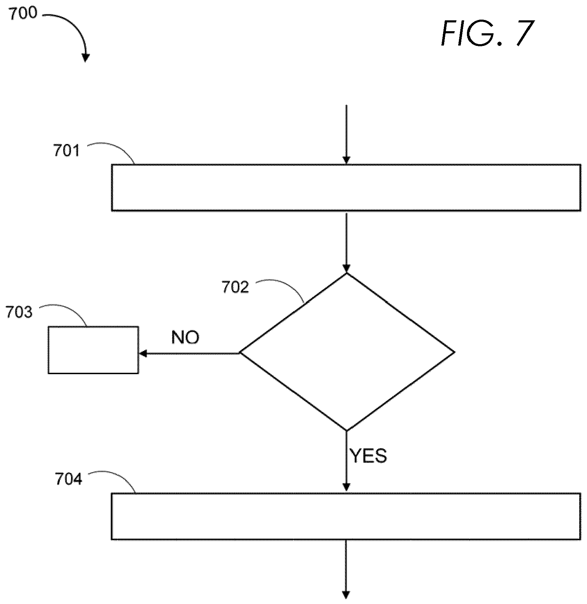

FIG. 7 ein vereinfachtes Flussdiagramm einer Ausführungsform eines Verfahrens zum Verifizieren eines Urbildes durch eine Verifiziervorrichtung (103) des Kryptosystems gemäß FIG. 1.

Ausführung der Erfindung

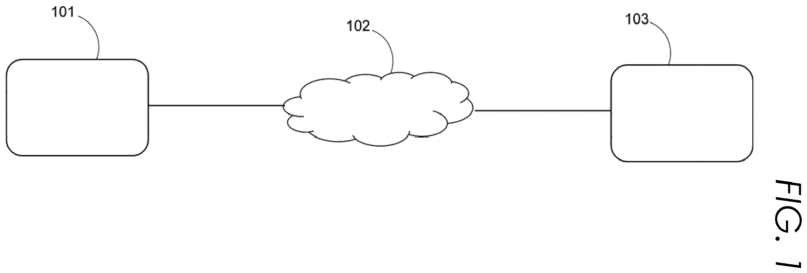

In Fig. 1 wird ein Kryptosystem 100 zur Erzeugung von Urbildern von Elementen aus dem Bildbereich von kryptografischen Falltürfunktionen unter Verwendung von mindestens einer Falltür gezeigt. Es versteht sich, dass das vorliegende Kryptosystem 100 eine Quantencomputer-resistente Erzeugung von Urbilder zu vorgegebenen oder zufälligen Elementen ermöglichen kann. In einigen Ausführungsformen kann das Kryptosystem 100 Quantencomputer-resistente Signaturen oder Verschlüsselungssysteme ermöglichen oder zur Erzeugung von kryptografischen Schlüsseln verwendet werden, wie nachstehend ausführlich beschrieben wird. Im Speziellen kann das Kryptosystem 100 in der veranschaulichenden Ausführungsform Merkmale von Falltürfunktionen und Mechanismen zur Erzeugung von Urbildern unter Verwendung von Falltüren, Zufallszahlen und Hashfunktionen implementieren. In einigen Ausführungsformen kann das Kryptosystem 100 zur Erzeugung von kryptografischen Signaturen verwendet werden, wobei das Signaturverfahren mittels einer kryptografischen Falltürfunktion instanziiert wird. In einigen Ausführungsformen wird das GPV-Signaturverfahren genutzt. In anderen Ausführungsformen können mittels Falltürfunktionen unverfälschbare Schwellwert-Signaturen ("Schwellwertsignaturen") oder andere Primitive realisiert werden, wie z.B. Blindsignaturen. In einigen Ausführungsformen kann das Kryptosystem 100 zur Erzeugung von kryptografischen Schlüsseln oder innerhalb eines Verschlüsselungsverfahrens genutzt werden. Es versteht sich, dass das Kryptosystem 100 gegenüber Quantencomputer-Angriffen resistent sein kann.

Gemäß dem Diagramm in FIG. 1 umfasst das Kryptosystem 100, eine oder mehrere Invertiervorrichtungen 101 zur Erzeugung von Urbildern von einem oder mehreren Falltürfunktionen, ein Kommunikationsnetz 102, eine oder mehrere Verifiziervorrichtungen 103. In einigen Ausführungsformen können Invertiervorrichtungen 101 als Signaturvorrichtungen verwendet werden. In einigen Ausführungsformen dienen die Invertiervorrichtungen 101 der Schlüsselerzeugung, wie z.B. für Verschlüsselungs-, (Schwellwert-)Signaturverfahren oder für andere Kryptoverfahren. Dann können noch eine oder weitere Vorrichtungen für die Verschlüsselung oder zur Erzeugung von Signaturen, wie z.B. Schwellenwertsignaturen ("Threshold-Signatures"), zum Einsatz kommen. In einigen Ausführungsformen kommunizieren mehrere Invertiervorrichtungen 101 über ein Netzwerk miteinander. In weiteren Ausführungsformen kann das Kryptosystem 100 mehrere Kommunikationsnetzwerke 102, Invertiervorrichtungen 101 und Verifiziervorrichtungen 103 umfassen.

In einigen Ausführungsformen kann die Invertiervorrichtung 101 auch durch eine Verifiziervorrichtung 103 gegeben sein. In weiteren Ausführungsformen können sich Invertiervorrichtungen 101 bei anderen Verifiziervorrichtungen 103 oder Vorrichtungen 101 authentifizieren.

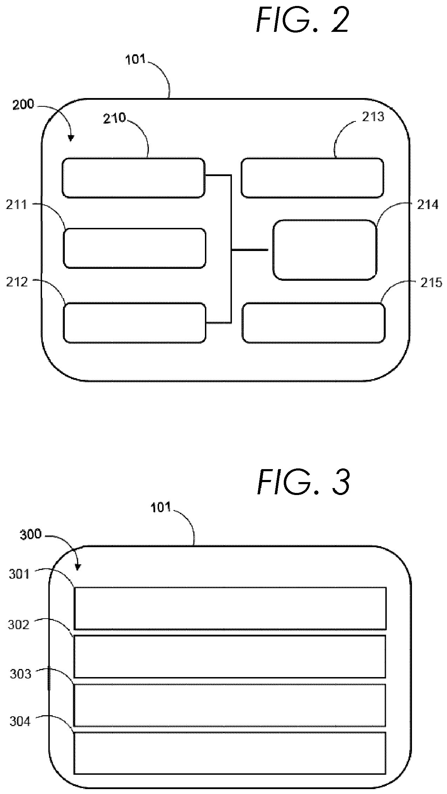

Bezugnehmend auf FIG. 2 können jede Invertiervorrichtung 101 und jede Verifiziervorrichtung 103 als irgendeine Form von Computervorrichtung verkörpert sein, die die Fähigkeiten hat, die Daten zu verarbeiten und die Funktionen hierin zu berechnen. Beispielsweise kann in einigen Ausführungsformen jedes Gerät als Server, Desktop-Computer, Laptop-Computer, Notebook, Netbook, tragbares Computergerät, Router, Mobiltelefon, Smartphone, mobiles Internetgerät und / oder andere alternative Computer- oder Kommunikationsgeräte ausgeführt sein. Jede Vorrichtung 101 und jede Verifiziervorrichtung 101 kann einen Prozessor 213, ein Eingabe- / Ausgabesystem ("E / A" -System) 210, einen Speicher 215, einen Datenspeicher 212, ein Kommunikationssystem 211 und ein oder mehrere Eingabe- / Ausgabegeräte oder Peripheriegeräte 214 beinhalten. In einigen Ausführungsformen kann jedes Gerät andere und / oder unterschiedlich weitere Komponenten enthalten. Beispielsweise kann es Komponenten enthalten, die üblicherweise in herkömmlichen Computergeräten zu finden sind (z. B. verschiedene Eingabe- / Ausgabegeräte, Peripheriegeräte und / oder andere Komponenten).

Bezugnehmend auf FIG. 3 erzeugt jede Vorrichtung 101 eine Umgebung 300 für Kryptosysteme zur Erzeugung von kryptografischen Urbildern von Elementen bezüglich einer oder mehreren kryptografischen Falltürfunktionen unter Verwendung einer oder mehrerer Falltüren ("Trapdoors"). Die Umgebung kann so zusammengesetzt sein, dass sie ein Kryptografiemodul 303, ein Kommunikationsmodul 304, ein Überprüfungsmodul 302 und ein Invertiermodul 301 umfasst. Jedes der Module kann in Form von Software, Hardware, Firmware oder Kombinationen davon vorliegen. In einigen Ausführungsformen erzeugt die Vorrichtung 101 eine Umgebung 300 für kryptografische Signaturen. In anderen Ausführungsformen erzeugt die Vorrichtung 101 eine Umgebung 300 zur Erzeugung von kryptografischen Schlüsseln.

Bezugnehmend auf FIG. 3 ist das Invertierungsmodul 301 derart implementiert, um Urbilder von Elementen bezüglich einer oder mehreren kryptografischen Falltürfunktionen mittels einer oder mehreren Falltüren in Verbindung mit dem Kryptografiemodul basierend auf den in dieser Erfindungsmeldung beschriebenen Techniken zu erzeugen. In einigen Ausführungsformen kann das Invertiermodul auch als Signaturmodul zur Erzeugung von kryptografischen Signaturen fungieren. In anderen Ausführungsformen kann das Invertierungsmodul auch als Schlüsselerzeugungsmodul zur Erzeugung von kryptografischen Schlüsseln für Verschlüsselungs- oder Signatursysteme fungieren.

Das Kryptografiemodul 303 ist derart implementiert, um verschiedene kryptografische Funktionalitäten und / oder andere Sicherheitsfunktionen in der Vorrichtung 101 auszuführen. In einigen Ausführungsformen können diese Funktionen in Software / Firmware und / oder auf Hardware ausgeführt werden, wie z.B. ein unabhängiger Krypto-Co-Prozessor ("*Security Co-Processor*"), eine Krypto-Engine ("*Cryptographic Engine*"), ein Krypto-Beschleuniger ("*Cryptographic Accelerator*") in einem Prozessor 213 oder andere Hardware. In einigen Ausführungsformen kann die Erzeugung von kryptografischem Schlüsselmaterial für verschiedene kryptografische Funktionen wie Verschlüsselung, Entschlüsselung, Signaturerzeugung und Verifizierung auch durch das Kryptografiemodul 303 ausgeführt werden. Dies umfasst in einigen Ausführungsformen auch die sichere Kommunikation mit anderen entfernten Geräten.

Das Überprüfungsmodul 302 ist derart implementiert, um die Gültigkeit eines Urbildes zu überprüfen, die von Vorrichtungen 101 empfangen wurden. In einigen Ausführungsformen kann ein Überprüfungsgerät 103 eine Vorrichtung 101 oder ein beliebiges anderes Computergerät sein.

Das Kommunikationsmodul 304 ist derart implementiert, um die Kommunikationsabfragen zwischen Rechengeräten wie der Vorrichtung 101 und dem Verifizierungssystem 103 zu verwalten und zu verarbeiten.

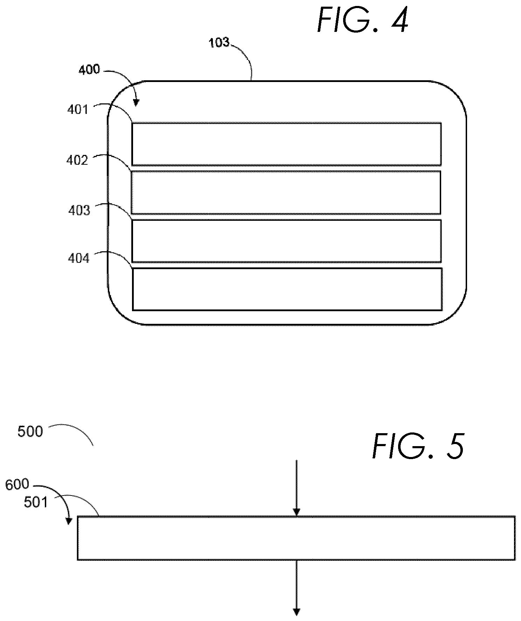

Bezugnehmend auf FIG. 4 erzeugt jede Vorrichtung 103 eine Umgebung 400 für Kryptosysteme mit Falltürfunktionen. Die Umgebung kann so ausgeführt sein, dass sie ein Modul 401 zur Erzeugung von Urbildern von Falltürfunktionen, ein Überprüfungsmodul 402, ein Kryptografiemodul 403 und ein Kommunikationsmodul 404 ähnlich der in FIG. 3 beschriebenen Vorrichtung 101 enthält. Es versteht sich, dass das Modul 401 derart implementiert ist, dass es in Verbindung mit dem Kryptografiemodul 403 zum Erzeugen von kryptografischen Urbildern von Elementen bezüglich Falltürfunktionen sowie von Perturbationen, zufälligen Termen, kryptografischen Beweisen und Signaturteilen unter Nutzung der privaten Falltür verwendet werden kann. Es versteht sich, dass ein oder mehrere Teilnehmer die Erstellung von einem oder mehreren Urbildern mittels einer oder mehreren Invertiervorrichtungen 101 vornehmen können.

Eine detaillierte Implementierung wird unten am Beispiel einer Ausführungsform für die Erzeugung von Urbildern angegeben.

Detaillierte Ausführung der Erfindung

In Block 501 werden öffentliche und geheime Schlüssel oder Elemente der Falltürfunktion $F$ generiert. Dazu gehört ebenfalls die Falltür.

In einem Ausführungsbeispiel ist die Falltürfunktion durch $F_A(x) = A \cdot x \bmod q$ gegeben. In einem Ausführungsbeispiel ist die Falltür durch $T$ gegeben, wobei $A$ durch $A = [G \pm \overline{A} \cdot R, \overline{A}]$ oder $A = [\overline{A}, G \pm \overline{A} \cdot R]$ und $T$ durch mindestens einer der Matrizen $\pm R$, $\begin{bmatrix} \pm I \\ \pm R \end{bmatrix}$, $\begin{bmatrix} \pm R \\ \pm I \end{bmatrix}$, $\begin{bmatrix} 0 & \pm I \\ \pm B & \pm R \end{bmatrix}$ oder $\begin{bmatrix} 0 & \pm R \\ \pm B & \pm I \end{bmatrix}$ gegeben ist. In einem anderen Ausführungsbeispiel ist die Falltür durch $[C,T]$ mit $C = \begin{bmatrix} 0 \\ B \end{bmatrix}$ gegeben. In einem Ausführungsbeispiel ist $B$ und $I$ öffentlich bekannt. In einem weiteren Ausführungsbeispiel ist $\overline{A} = [I, U]$. In den obigen Beschreibungen können mindestens einer der Matrizen $I, \overline{A}, B, A, U, C$ oder $G$ öffentlich sein. In einem Ausführungsbeispiel wird $T$ oder $R$ geheim gehalten. In einem Ausführungsbeispiel bezeichnet $I$ die Einheitsmatrix. In einem weiteren Ausführungsbeispiel werden auf einzelne oder mehrere Matrizen noch mindestens eine Permutation, Transponierung oder Vertauschung angewendet.

In Block 601 wird ein Element $u$ bestimmt, für das ein Urbild bezüglich einer Falltürfunktion mittels einer Falltür erzeugt wird.

In einem Ausführungsbeispiel wird die Vorrichtung 101 zum Signieren verwendet. Dazu stellt $u$ den Hashwert einer Nachricht oder von beliebigen Daten dar, die signiert werden sollen. In einem Ausführungsbeispiel wird ein zufälliger Wert an die Nachricht oder Daten angehängt und dann der Hashwert gebildet.

In einem Ausführungsbeispiel wird $u$ zum Verschlüsseln verwendet, wobei sich $u$ als Hashwert beliebiger Daten oder von Bezeichnern ermitteln lässt.

In Block 602 werden Perturbationen p generiert und $d$ aus $p$ unter Verwendung der Falltürfunktion $F$ ermittelt. In einem Ausführungsbeispiel wird $d = F(p)$ oder $d = \pm F(-p)$ berechnet. In einem Ausführungsbeispiel werden die Perturbationen $p$ gemäß einer Verteilung mit Kovarianzmatrix $\mathrm{Diag}(s_1^2, ..., s_k^2)\text{-}r^2 \cdot T^t \cdot T$ erzeugt, wobei mindestens zwei Elemente $s_i^2 \neq s_j^2$ existieren mit mindestens einem Element $s_i < SV(T) \cdot r$ und mindestens einem Element $s_j \geq SV(T) \cdot r$, sodass $\mathrm{Diag}(s_1^2, ..., s_k^2)$ nicht als $s^2 \cdot I$ dargestellt werden kann und $\mathrm{Diag}(s_1^2, ..., s_k^2)\text{-}r^2 \cdot T^t \cdot T$ positiv semidefinit ist. Hierbei bezeichnet $SV(T)$ den maximalen Singulärwert von $T$ und $\mathrm{Diag}(s_1^2, ..., s_k^2)$ bezeichnet eine Diagonalmatrix mit den Elementen $s_1^2, ..., s_k^2 \geq 0$ auf der Diagonalen. In einem Ausführungsbeispiel werden mindestens zwei Elemente $s_i^2 \neq s_j^2$ mit $s_i < s$ und

$$ s_j \geq s \cdot \sqrt{1 + \frac{1}{\frac{s_i^2}{r^2} - 1}} $$

für $s \geq SV(T) \cdot r$ und $r, c \geq 1$ gewählt. In einem Ausführungsbeispiel gibt es mindestens zwei unterschiedliche Elemente mit $s_i = c \cdot r$ und

$$ s_j = s \cdot \sqrt{1 + \frac{1}{c^2 - 1}} $$

für mindestens zwei Indizes $i \neq j$. In einem weiteren Ausführungsbeispiel werden Perturbationen gemäß einer Verteilung mit Kovarianzmatrix

$$ L^t \cdot \left(\mathrm{Diag}(s_1^2, ..., s_k^2)\text{-}r^2 \cdot T^t \cdot T\right) \cdot L $$

erzeugt, wobei L eine weitere Matrix oder ein Term darstellt, der sich aus mehreren Matrizen zusammensetzt. In einem weiteren Ausführungsbeispiel werden auf einzelne oder mehrere Matrizen Permutationen, Transponierungen und/oder Vertauschungen angewendet. In einem Ausführungsbeispiel ist L eine Einheitsmatrix.

In Block 603 werden mit Hilfe der Falltür mindestens ein Element x generiert, sodass $F(x) = u \pm d$ erfüllt ist.

In einem Ausführungsbeispiel wird mindestens ein Element $x$ erzeugt, sodass $G \cdot x = \pm(u \pm d)$ oder $\overline{G} \cdot x = \pm(u \pm d)$ mit $\overline{G} = [D,G]$ für Matrizen $D$ und $G$. In einem Ausführungsbeispiel ist $A = [G \pm \overline{A} \cdot R, \overline{A}]$ oder $A = [\overline{A}, G \pm \overline{A} \cdot R]$.

In einem Ausführungsbeispiel wird $x$ entsprechend einer Verteilung mit Kovarianzmatrix $r^2 \cdot I$ erzeugt, wobei $I$ die Einheitsmatrix darstellt.

In Block 604 wird ein Urbild $z$ von $u$ bezüglich $F$ ausgegeben.

In einem Ausführungsbeispiel wird die Falltürfunktion im Rahmen eines Signaturverfahrens (z.B. GPV Signaturverfahren) verwendet und $z$ als Signatur zu einer Nachricht ausgegeben, wobei die Nachricht in die Bestimmung von $u$ einfließt. In einem anderen Ausführungsbeispiel wird die Falltürfunktion und Falltür für ein Verschlüsselungsverfahren verwendet, wobei $z$ als ein Entschlüsselungsschlüssel dient. In einem anderen Ausführungsbeispiel wird $z$ als Signaturschlüssel eingesetzt.

In einem Ausführungsbeispiel ist das Urbild $z$ entsprechend der Kovarianzmatrix $\mathrm{Diag}(s_1^2, ..., s_k^2)$ verteilt.

In Block 701 wird $F(z)$ unter Nutzung der öffentlichen Elemente der Falltürfunktion berechnet. In einem Ausführungsbeispiel wird $F(z) = A \cdot z \bmod q$ berechnet.

In Block 702 wird überprüft, ob $F(z) = u$ gilt und $z$ eine gültige Norm hat. In einem Ausführungsbeispiel wird überprüft, ob die euklidische Norm von $z$ eine vorgegebene Schranke nicht übereschreitet.

Falls die Bedingungen nicht erfüllt sind, wird in Block 703 0 ausgegeben. Ansonsten wird in Block 704 bei Erfüllung der Bedingungen 1 ausgegeben.

In einem Ausführungsbeispiel wird die Falltürfunktion im Rahmen eines Signaturverfahrens (z.B. GPV Signaturverfahren) verwendet und die Signatur über eine Nachricht überprüft. Falls die Norm von $z$ gültig ist und $F(z) = u$ gilt, wobei die Nachricht in die Berechnung von $u$ einfließt, so ist die Signatur ebenfalls gültig. Ansonsten ist die Signatur ungültig.

In einem anderen Ausführungsbeispiel, wie z. B. für ein Verschlüsselungsverfahren zur Erzeugung von kryptografischen Schlüsseln, ist ein Verifiziervorgang nicht nötig. In diesem Fall entfallen die Schritte der Verifikation aus Block 701 - Block 704. In einem anderen Ausführungsbeispiel können sich die Verifiziervorgänge von denen aus Block 701 - Block 704 unterscheiden.

**Patentansprüche**

1. Kryptographisches System mit Falltürfunktion (100), bei dem zur Erzeugung von mindestens einem Urbild von mindestens einem Element bezüglich einer gitterbasierten Falltürfunktion $F$ eine Falltür zum Einsatz kommt,
   **dadurch gekennzeichnet, dass**
   zur Erzeugung eines Urbildes mindestens ein zufälliger Term erzeugt wird, dessen Kovarianzmatrix durch $L^t \cdot (\mathrm{Diag}(s_1^2, ..., s_k^2) - r^2 \cdot T^t \cdot T) \cdot L$ gegeben ist, wobei mindestens zwei Elemente $s_i^2 \neq s_j^2$ vorgesehen sind, mit mindestens einem Element $s_i < SV(T) \cdot r$.

2. Kryptographisches System (100) nach Anspruch 1,
   **dadurch gekennzeichnet, dass**
   mindestens zwei Elemente $s_i^2 \neq s_j^2$ vorgesehen sind, mit

   a)
   $$s_i < s \text{ und } s_j \geq s \cdot \sqrt{1 + \frac{1}{\frac{s_i^2}{r^2} - 1}},$$

   oder
   b)
   $$s_i = c \cdot r \text{ und } s_j = s \cdot \sqrt{1 + \frac{1}{c^2 - 1}}$$

   für $s \geq SV(T) \cdot r$ und $r, c \geq 1$.

3. Kryptographisches System (100) nach einem der vorangegangenen Ansprüche,
   **dadurch gekennzeichnet, dass**
   die Matrizen $L^t$ und $L$ durch die Einheitsmatrix $I$ gegeben sind.

4. Kryptographisches System (100) nach einem der vorangegangenen Ansprüche,
   **dadurch gekennzeichnet, dass**
   die gitterbasierte Falltürfunktion durch $F(x) = A \cdot x \bmod q$ gegeben ist, wobei $A$ eine Matrix darstellt.

5. Kryptographisches System (100) nach einem der vorangegangenen Ansprüche,
   **dadurch gekennzeichnet, dass**
   die Matrix $A$ durch $A = [\overline{A}, G \pm \overline{A} \cdot R]$ oder $A = [G \pm \overline{A} \cdot R, \overline{A}]$ gegeben ist, wobei $\overline{A}$, R und $G$ Matrizen sind, und

   a) $T$ durch einer der Matrizen $\pm R$, $\begin{bmatrix} \pm I \\ \pm R \end{bmatrix}$ oder $\begin{bmatrix} \pm R \\ \pm I \end{bmatrix}$ gegeben ist, oder

   b) $T$ durch einer der Matrizen $\begin{bmatrix} 0 & \pm I \\ \pm B & \pm R \end{bmatrix}$ oder $\begin{bmatrix} 0 & \pm R \\ \pm B & \pm I \end{bmatrix}$ gegeben ist.

6. Kryptographisches System (100) nach einem der vorangegangenen Ansprüche,
   **dadurch gekennzeichnet, dass**
   die Falltür durch $T$ oder $[C, T]$ gegeben ist.

7. Kryptographisches System (100) nach einem der vorangegangenen Ansprüche,

**dadurch gekennzeichnet, dass**
auf mindestens einer der angeführten Matrizen noch mindestens eine Vertauschung, Transponierung oder Permutation angewendet wird.

8. Kryptographisches System (100) nach einem der vorangegangenen Ansprüche
**dadurch gekennzeichnet, dass**
zur Erstellung einer kryptografischen Signatur zu einer Nachricht oder zur Erstellung eines kryptografischen Schlüssels, ein Urbild von einem Element $u$ bezüglich $F$ erzeugt wird, wobei mindestens eine Perturbation $p$ mit Kovarianzmatrix $\mathrm{Diag}(s_1^2, \ldots, s_k^2)\text{-}r^2 \cdot T^t \cdot T$ erzeugt wird.

9. Kryptographisches System (100) nach einem der vorangegangenen Ansprüche
**dadurch gekennzeichnet, dass**
zur Erstellung einer kryptografischen Signatur zu einer Nachricht oder zur Erstellung eines kryptografischen Schlüssels, ein Urbild von einem Element $u$ bezüglich $F$ erzeugt wird, wobei

   a) mindestens eine Perturbation $p$ mit Kovarianzmatrix $\mathrm{Diag}(s_1^2, \ldots, s_k^2)\text{-}r^2 \cdot T^t \cdot T$ erzeugt wird, und
   b) $d$ aus p unter Verwendung der Falltürfunktion $F$ ermittelt wird.

10. Kryptographisches System (100) nach einem der vorangegangenen Ansprüche,
**dadurch gekennzeichnet, dass**
$d = F(p)$ oder $d = \pm F(\text{-}p)$ berechnet wird.

11. Kryptographisches System (100) nach einem der vorangegangenen Ansprüche,
**dadurch gekennzeichnet, dass**
mindestens ein Element x erzeugt wird, sodass $G \cdot x = \pm(u \pm d)$ oder $\overline{G} \cdot x = \pm(u \pm d)$ mit $\overline{G} = [D,G]$ für Matrizen $D$ und $G$ gilt.

12. Kryptographisches System (100) nach einem der vorangegangenen Ansprüche,
**dadurch gekennzeichnet, dass**
in die Erzeugung eines Urbildes, einer Signatur oder eines kryptografischen Schlüssels die Terme $x$ und $p$ unter Verwendung der Falltür einfließen.

13. Kryptographisches System (100) nach einem der vorangegangenen Ansprüche
**dadurch gekennzeichnet, dass**
zur Verschlüsselung von Nachrichten

   a) Mindestens ein Datenstring *data* mittels einer deterministischen oder zufälligen Funktion *H* zu

$h = H(data)$ transformiert wird, und
   b) *h* und *F* zur Erzeugung von mindestens einem Schlüsseltext c verwendet werden,

und zur Entschlüsselung des Schlüsseltextes mindestens ein Element z mit $F(z) = H(data)$, das mit Hilfe der Falltür ermittelt wurde, zur Entschlüsselung des Schlüsseltexts c verwendet wird.

14. Kryptographisches System (100) nach einem der vorangegangenen Ansprüche,
**dadurch gekennzeichnet, dass**
zur Verschlüsselung Identitäten oder Bezeichner in die Berechnung von *h* einfließen.

15. Kryptographisches System (100) nach einem der vorangegangenen Ansprüche
**dadurch gekennzeichnet, dass**
*z* für ein Element *u* mit $F(z) = u$ ermittelt und als privater Schlüssel in Kryptoverfahren verwendet wird.

FIG. 1

*FIG. 2*

*FIG. 3*

## FIG. 4

## FIG. 5

FIG. 6

601

602

603

604

700

*FIG. 7*

701

702

703

704

NO

YES

Europäisches
Patentamt

European
Patent Office

Office européen
des brevets

**EUROPÄISCHER RECHERCHENBERICHT**

Nummer der Anmeldung

EP 21 16 6626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BANSARKHANI RACHID EL ET AL: "Improvement and Efficient Implementation of a Lattice-Based Signature Scheme", 21. Mai 2014 (2014-05-21), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 48 - 67, XP047423905, ISBN: 978-3-642-17318-9 [gefunden am 2014-05-21] * sections 2, 3, 4 * | 1-15 | INV. H04L9/30 |
| A | GENISE NICHOLAS ET AL: "Faster Gaussian Sampling for Trapdoor Lattices with Arbitrary Modulus", 31. März 2018 (2018-03-31), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 174 - 2, XP047471992, ISBN: 978-3-642-17318-9 [gefunden am 2018-03-31] * sections 3, 4 * | 1-15 | RECHERCHIERTE SACHGEBIETE (IPC) H04L |

Der vorliegende Recherchenbericht wurde für alle Patentansprüche erstellt

| Recherchenort | Abschlußdatum der Recherche | Prüfer |
|---|---|---|
| München | 2. September 2021 | Spranger, Stephanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)